# EUROPÄISCHE PATENTSCHRIFT

(11) **EP 1 085 808 B1**
(45) Veröffentlichungstag und Bekanntmachung des Hinweises auf die Patenterteilung: **22.01.2003**
(21) Anmeldenummer: 99926445.0
(22) Anmeldetag: 27.05.1999
(51) Int. Cl.: A01N 43/80

(54) **HERBIZIDE MISCHUNG, ENTHALTEND EIN 3 HETEROCYCLYL-SUBSTITUIERTES BENZOYLDERIVAT**
HERBICIDAL MIXTURE CONTAINING A 3 HETEROCYCLYL-SUBSTITUTED BENZOYL DERIVATIVE
MELANGE HERBICIDE CONTENANT UN DERIVE BENZOYLE A SUBSTITUTION 3-HETEROCYCLYLE

(30) Priorität: 09.06.1998 DE 19825588
(43) Veröffentlichungstag der Anmeldung: 28.03.2001
(73) Patentinhaber: BASF AKTIENGESELLSCHAFT, 67056 Ludwigshafen (DE)
(72) Erfinder: BRATZ, Matthias, D-67117 Limburgerhof (DE); BERGHAUS, Rainer, D-67346 Speyer (DE); OTTEN, Martina, D-67069 Ludwigshafen (DE); SIEVERNICH, Bernd, D-67459 Böhl-Iggelheim (DE); KIBLER, Elmar, D-67454 Ha loch (DE)
(86) Internationale Anmeldenummer: EP9903676
(87) Internationale Veröffentlichungsnummer: WO99063823

(56) Entgegenhaltungen:
- WO-A-92/19107
- WO-A-96/26206
- US-A- 5 658 855
- DATABASE WPI Week 8030 Derwent Publications Ltd., London, GB; AN 1980-52726C XP002116932 & SU 701 626 A (PENKOV), 10. Dezember 1997 (1997-12-10)

## Beschreibung

Die vorliegende Erfindung betrifft eine herbizide Mischung mit synergistischer Wirkung aus einem 3 heterocyclyl-substituierten Benzoylderivat, einem stickstof fhaltigen Dünger und einem Adjuvant.

3-Heterocyclyl-substituierte Benzoylderivate sind bekannt und werden beispielsweise in WO 96/26206, WO 97/41116, WO 97/41117 und WO 97/41118 beschrieben.

Aus der EP-B-0584 227 sind herbizide Zusammensetzungen aus substituierten Cyclohexandionen und Stickstoffdüngern bekannt.

Aufgabe der vorliegenden Erfindung war es, eine herbizide Mischung zur Verfügung zu stellen, die 3-heterocyclyl-substituierte Benzoylderivate enthält und deren herbizide Wirkung erhöht ist gegenüber der Wirkung des reinen Wirkstoffs.

Diese Aufgabe konnte gelöst werden mit einer herbiziden Mischung, die
a) eine herbizid wirksame Menge eines 3-heterocyclyl-substituierten Benzoylderivates der Formel I 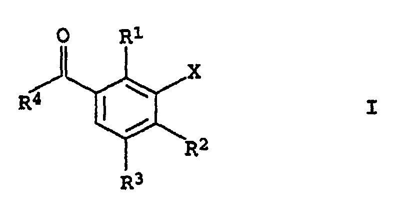 in der die Variablen folgende Bedeutung haben:
   - R¹,R²: Wasserstoff, Halogen, C₁-C₆-Alkyl, C₁-C₆-Alkylthio, C₁-C₆-Alkylsulfinyl, C₁-C₆-Alkylsulfonyl C₁-C₆-Halogenalkyl, C₁-C₆-Alkoxy, C₁-C₆-Halogenalkoxy;
   - R³: Wasserstoff, Halogen, C₁-C₆-Alkyl;
   - X: Heterocyclus aus der Gruppe Isoxazolyl, 4,5-Dihydroisoxazolyl und Thiazolyl, wobei der Heterocyclus gegebenenfalls einfach oder mehrfach mit Halogen, C₁-C₆-Alkyl, C₁-C₄-Alkoxy, C₁-C₄-Halogenalkyl, C₁-C₄-Halogenalkoxy, C₁-C₄-Alkylthio substituiert sein kann;
   - R⁴: ein in 4-Stellung verknüpftes Pyrazol der Formel II 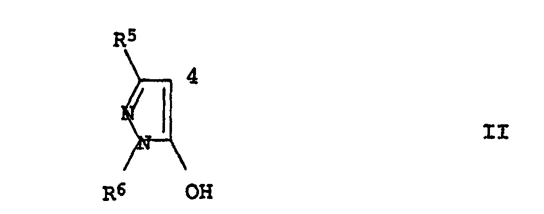
   wobei
   - R⁵: Wasserstoff oder C₁-C₆-Alkyl,
   - R⁶: C₁-C₆-Alkyl
   bedeuten, oder deren umweltverträglichen Salze;
b) einen stickstoffhaltigen Dünger in einer synergistisch wirksamen Menge und
c) ein Adjuvant in einer synergistisch wirksamen Menge
enthält.

Die erfindungsgemäße herbizide Mischung zeigt eine synergistische Wirkung und ist für diejenigen Kulturpflanzen selektiv, für welche die Einzelverbindungen selbst auch verträglich sind.

Im Hinblick auf die synergetische herbizide Wirkung besonders bevorzugte 3-heterocyclyl-substituierte Benzoylderivate der Formel Ib sind solche, in denen 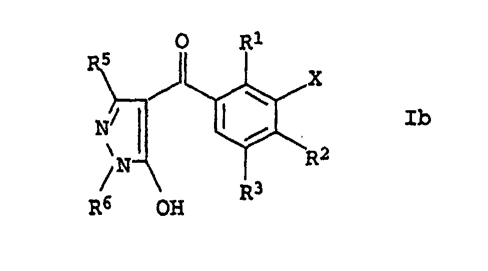
- R¹,R²: Chlor, Methyl, Ethyl, SCH₃, SOCH₃, SO₂CH₃
- R³: Wasserstoff und Methyl;
- R⁵: Wasserstoff, Methyl, Trifluormethyl;
- R⁶: Methyl, Ethyl, i-Propyl;
- x: Heterocyclus aus der Gruppe: Isoxazolyl, 4,5-Dihydroisoxazolyl und Thiazolyl, wobei der Heterocyclus gegebenenfalls einfach oder mehrfach mit Halogen, C₁-C₆-Alkyl, C₁-C₄-Alkoxy, C₁-C₄-Halogenalkyl, C₁-C₄-Halogenalkoxy, C₁-C₄-Alkylthio substituiert sein kann,
bedeuten oder deren umweltverträglichen Salze.

Bevorzugte Verbindungen der Formel Ib sind in der folgenden Tabelle zusammengestellt:

| Nr. | R¹ | R² | R³ | R⁵ | R⁶ | X |
|---|---|---|---|---|---|---|
| 1 | Cl | SO₂CH₃ | H | CH₃ | CH₃ | 2-Thiazolyl |
| 2 | Cl | SO₂CH₃ | H | H | CH₃ | 2-Thiazolyl |
| 3 | Cl | SO₂CH₃ | H | CH₃ | CH₃ | 4,5-Dihydro-isoxazol-3-Yl |
| 4 | Cl | Cl | H | CH₃ | CH₃ | 4,5-Dihydro-isoxazol-3-Yl |
| 5 | Cl | SO₂CH₃ | H | H | CH₃ | 4,5-Dihydro-isoxazol-3-Yl |
| 6 | Cl | SO₂CH₃ | H | H | CH₃ | 4,5-Dihydro-5-methylisoxazol-3-yl |
| 7 | Cl | SO₂CH₃ | H | H | CH₃ | 4,5-Dihydro-5,5-dimethylisoxazol-3-yl |
| 8 | Cl | SO₂CH₃ | H | H | CH₃ | 4,5-Dibydro-5-ethylisoxazol-3-yl |
| 9 | Cl | SO₂CH₃ | H | H | CH₃ | 4,5-Dihydro-5,5-diethylisoxazol-3-yl |
| 10 | Cl | SO₂CH₃ | H | H | CH₃ | 4,5-Dihydro-5-chlormethylisoxazol-3-yl |
| 11 | Cl | SCH₃ | H | H | CH₃ | 4,5-Dihydro-isoxazol-3-Yl |
| 12 | Cl | SO₂CH₃ | H | H | CH₃ | 4,5-Dihydro-5-ethoxyisoxazol-3-Y1 |
| 13 | Cl | SO₂CH₃ | H | H | CH₃ | 4,5-Dihydro-5-methoxyisoxazol-3-yl |
| 14 | CH₃ | SO₂CH₃ | H | H | CH₃ | 4,5-Dihydro-isoxazol-3-Yl |
| 15 | Cl | SO₂CH₃ | H | H | CH₃ | 4,5-Dihydro-4,5-dimethylisoxazol-3-Yl |
| 16 | Cl | SO₂CH₃ | H | H | CH₃ | 4,5-Dihydro-5-thioethylisoxazol-3-yl |
| 17 | Cl | SO₂CH₃ | H | H | CH₃ | 4,5-Dihydro-5-trifluormethylisoxazol-3-yl |
| 18 | SCH₃ | SCH₃ | H | H | CH₃ | 4,5-Dihydro-isocazol-3-yl |
| 19 | Cl | SO₂CH₃ | H | H | C₂H₅ | 2-Thiazolyl |
| 20 | Cl | SO₂CH₃ | H | H | C₂H₅ | 4,5-Dihydro-isocazol-3-yl |
| 21 | CL | SO₂CH₃ | H | H | C₂H₅ | 4,5-Dihydro-5-methylisozazol-3-yl |
| 22 | Cl | SO₂CH₃ | H | H | C₂H₅ | 4,5-Dihydro-5,5-dimethylisoxazol-3-yl |
| 23 | Cl | SO₂CH₃ | H | H | C₂H₅ | 4,5-Dihydro-5-ethylisoxazol-3-yl |
| 24 | Cl | SO₂CH₃ | H | H | C₂H₅ | 4,5-Dihydro-5,5-diethyisoxazol-3-yl |
| 25 | Cl | SCH₃ | H | H | C₂H₅ | 4,5-Dihydro-isoxazol-3-Yl |
| 26 | Cl | SO₂CH₃ | H | H | C₂H₅ | 4,5-Dihydro-5-chlormethylisoxazol-3-yl |
| 27 | Cl | SO₂CH₃ | H | H | C₂H₅ | 4,5-Dihydro-5-ethoxyisoxazol-3-yl |
| 28 | Cl | SO₂CH₃ | H | H | C₂H₅ | 4,5-Dihydro-4,5-dimethylisoxazol-3-yl |
| 29 | CH₃ | SO₂CH₃ | H | H | C₂H₅ | 4,5-Dihydro-isoxazol-3-Yl |
| 30 | Cl | SO₂CH₃ | H | H | C₂H₅ | 4,5-Dihydro-5-thioethylisoxazol-3-yl |
| 31 | Cl | SO₂CH₃ | H | H | C₂H₅ | 4,5-Dihydro-5-trifluormethylisoxazol-3-yl |
| 32 | SCH₃ | SCH₃ | H | H | C₂H₅ | 4,5-Dihydro-isoxazol-3-yl |
| 33 | Cl | SO₂CH₃ | H | H | i-C₄H₉ | 4,5-Dihydro-isoxazol-3-yl |
| 34 | Cl | SO₂CH₃ | H | H | CH₃ | 3-Methyl-isoxazol-5-Yl |
| 35 | CI | SO₂CH₃ | H | H | C₂H₅ | 3-Methyl-isoxazol-5-yl |
| 36 | CH₃ | SO₂CH₃ | H | H | C₂H₅ | 3-Methyl-isoxazol-5-yl |
| 37 | CH₃ | SO₂CH₃ | H | CH₃ | CH₃ | 4,5-Dihydro-isoxazol-3-yl |
| 38 | CH₃ | Cl | H | CH₃ | CH₃ | 4,5-Dihydro-isoxazol-3-yl |
| 39 | CH₃ | SO₂CH₃ | H | H | CH₃ | 4'5-Dihydro-5-methylisoxazol-3-yl |
| 40 | CH₃ | SO₂CH₃ | H | H | CH₃ | 4,5-Dihydro-5,5-dimethylisoxazol-3-yl |
| 41 | CH₃ | SO₂CH₃ | H | H | CH₃ | 4,5-Dihydro-5-ethylisoxazol-3-yl |
| 42 | CH₃ | SO₂CH₃ | H | H | CH₃ | 4,5-Dihydro-5,5-ethylisoxazol-3-yl |
| 43 | CH₃ | SO₂CH₃ | H | H | CH₃ | 4,5-Dihydro-isoxazol-3-Yl |
| 44 | CH₃ | SO₂CH₃ | H | H | CH₃ | 4,5-Dihydro-4,5-dimethylisoxazol-3-yl |
| 45 | CH₃ | Cl | H | H | C₂H₅ | 4,5-Dihydro-isoxazol-3-yl |
| 46 | CH₃ | SO₂CH₃ | H | H | C₂H₅ | 4,5-Dihydro-5-methylisoxazol-3-yl |
| 47 | CH₃ | SO₂CH₃ | H | H | C₂H₅ | 4,5-Dihydro-5,5-dimethylisoxazol-3-yl |
| 48 | CH₃ | SO₂CH₃ | H | H | C₂H₅ | 4,5-Dihydro-5-ethylisozazol-3-yl |
| 49 | CH₃ | SO₂CH₃ | H | H | C₂H₅ | 4,5-Dihydro-4,5-dimethylisoxazol-3-yl |
| 50 | CH₃ | SO₂CH₃ | H | H | i-C₄H₉ | 4,5-Dihydro-isoxazol-3-Yl |

### Ganz besonders bervorzugt sind die Verbindungen

4-[2-Chlor-3-(4,5-dihydroisoxazol-3-yl)-4-methylsulfonyl-benzoyl]-1-methyl-5-hydroxy-1H-pyrazol,
4-[2-Methyl-3-(4,5-dihydroisoxazol-3-yl)-4-methylsulfonyl-benzoyl]-1-methyl-5-hydroxy-1H-pyrazol,
4-[2-Chlor-3-(3-methyl-isoxazol-5-Yl)-4-methylsulfonyl-benzoyl]-1-methyl-5-hydroxy-1H-pyrazol,
oder deren umweltverträglichen Salze.

Geeignete umweltverträgliche Salze sind Salze von beispielsweise Alkalimetallen, Erdalkalimetallen, Ammoniak oder Aminen.

Geeignete stickstoffhaltige Dünger b) sind Ammoniak und Ammoniumsalze, Harnstoff, Thioharnstoff und deren Gemische.

Beispiele für geeignete Dünger sind
wss. Ammnoniaklösung, Ammoniumnitrat, Ammoniumsulfat, Amnmoniumhydrogensulfat, Ammoniumchlorid, Ammoniumacetat, Ammoniumformiat, Ammoniumoxalat, Ammoniumcarbonat, Ammoniumhydrogencarbonat, Ammoniumnitrat, Ammoniumthiosulfat, Ammoniumphosphat, Ammoniumhydrogendiphosphat, Ammoniumdihydrogenmonophosphat, Ammoniumnatriumhydrogenphosphat, Ammoniumthiocyanat, Harnstoff und Thioharnstoff sowie deren Gemische als auch Ammoniumnitrat-Harnstofflösungen (UAN oder AHL-Lösungen).

Bevorzugte stickstoffhaltige Dünger sind
Harnstoff, Ammoniumnitat, Ammoniumnitrat-Harnstofflösungen, Ammoniumsulfat, Ammoniumphosphat, Ammoniumhydrogendiphosphat, Ammoniumdihydrogenmonophosphat und ATmoniumnatriumhydroqenphosphat.

Ganz besonders bevorzugt sind
Harnstoff, Ammoniumnitrat und Ammoniumnitrat-Harnstofflösungen. Die Ammoniumnitrat-Harnstofflösungen haben bevorzugt einen Gesamtstickstoffgehalt von 28 - 33 % (w/w) und werden beispielsweise unter dem Markennamen Ensol® 28 von der BASF vermarktet.

Geeignete Adjuvants c) sind Pflanzenöle, die teilhydriert und hydriert sein können, modifizierte Pflanzenöle, Mineralöle, Alkoholalkoxylate, Alkoholethoxylate, alkylierte EO/PO-Blockcopolymere, Alkylphenolethoxylate, Polyole, EO/PO-Blockcopolymere, Organosiliziumverbindungen, Alkylglycoside₁ Alkylpolyglycoside, Alkylsulfate, sulfatierte Alkoholalkoxylate, Alkylarylsulfonate, Alkylsulfonate, Dialkylsulfosuccinate, Phospatierte Alkoholalkoxylate, Fettaminalkoxylate, Ester, Carboxylate, Esterethoxylate, Dialkyladipate, Dicarbonsäurederivate wie sog. Alkenyl succinic anhydride condensates mit polyalkylenoxiden oder Polyhydroxyaminen, Dialkylphtalate₁ ethoxylierte Sorbitanester natürlicher und ethoxylierte Glyceride natürlicher Fettsäuren.

### Bevorzugte Adjuvants sind

Alkoholalkoxylate wie Alkylether von EO/PO-Copolymeren, z.B. Plurafac® (BASF AG), Synperionic® LF (ICI), Alkoholethoxylate, wobei der Alkohol ein C₈-C₁₈-Alkohol synthetischer oder natürlicher Herkunft ist, der sowohl linear als auch verzweigt sein kann. Der Ethoxylat-Teil enthält je nach verwendetem Alkohol durchschnittlich 3-20 Mol Ethylenoxid. Beispielhaft verwendete Produkte sind Lutensol® ON, TO, AO und A der Firma BASF,
Alkylarylsulfonate wie Nonylphenolethoxylate mit 5-15 Mol EO, Polyole wie Polyethylenglykol oder Polypropylenglycol,
EO/PO-Blockcopolymere wie z.B. Pluronic® PE (BASF AG) oder Synperionic® PE (ICI),
Organosiliconverbindungen,
Alkylpolyglycoside wie z.B. Agrimul® (Henkel KGA), AG 6202 (Akzo-Nobel) Atplus® 450 (ICI) oder Lutensol® GD 70 (BASF AG), Fettaminalkoxylate wie z.B. Ethomeen® und Armobleem® der Firma Akzo Nobel,
Ester natürlicher und synthetischer Fettsäuren wie z.B. Methyloleate oder Methyl-cocoate,
Dialkyladipate,
ethoxylierte Sorbitanester natürlicher Fettsäuren, wie z.B. Tween® der Firma ICI Surfactants (Tween® 20, Tweeno 85, Tween® 80), ethoxylierte Glyceride natürlicher Fettsäuren, wie z.B. Glycerox® der Firma Croda.

Weitere Beispiele finden sich in:
McCutcheon's; Emulsifiers and Detergents,
Volume 1: Emulsifiers and Detergents 1994
North American Edition;
McCutcheon's Division, Glen Rock NJ, USA,

McCutcheon's; Emulsifiers and Detergents,
Volume 2:. Emulsifiers and Detergents 1994
International Edition;
McCutcheon Division, Glen Rock NJ, USA,

Surfactants in Europe;
A Directory of surface active agents available in Europe 2nd Ed. 1989;
Terg Data, Darlington, England,

Ash, Michael;
Handbook of cosmetic and personal care additives 1994;
Gower Publishing Ltd, Aldershot, England

Ash, Michael;
Handbook of industrial Surfactants 1993;
Gower Publishing Ltd. Aldershot, England.

Die erfindungsgemäße herbizide Mischung enthält die Komponenten a) bis c) in folgenden Mengen:
0,5 bis 90 Gew. -% des 3-heterocyclyl-substituierten Benzoyiderivates a) ;
5 bis 94,5 Gew.-% des stickstoffhaltigen Düngers b);
5 bis 50 Gew.-% des Adjuvants c).

Bevorzugte Mengenverhältnisse sind:
0,5 bis 50 Gew.-% des 3-heterocyclyl-substituierten Benzoylderivates a)
5 bis 90 Gew. -% des stickstoffhaltigen Düngers b)
bis 50 Gew. -% des Adjuvants c).

Hierbei ergänzen sich die Komponenten auf 100 Gew.-%.

Die einzelnen Komponenten a) bis c) der erfindungsgemäßen herbiziden Mischung können zusammen oder einzeln formuliert und verpackt werden. Weiterhin können die Komponenten a) mit b) oder a) mit c) formuliert und verpackt werden.

Der Landwirt verwendet die herbizide Mischung oder deren einzelne Komponenten für die Anwendung im Spritztank.

Dabei wird die herbizide Mischung mit Wasser verdünnt wobei ggf. weitere Hilfs- und Zusatzmittel zugegeben werden. Der Landwirt kann aber auch die einzelnen Komponenten a) bis c) der erfindungsgemäßen herbiziden Mischung selber im Spritztank mischen und ggf. weitere Hilfs- und Zusatzmittel zugeben (Tankmixverfahren).

Beim Tankmixverfahren werden die Komponenten a) bis c) im Spritztank gemischt und mit Wasser auf die gewünschte Anwendungskonzentration gebracht.

Für das Tankmixverfahren haben sich folgende Adjuvants bewährt:

Mineralöle, Paraffinöle, Pflanzenöle, hydrierte oder methylierte Pflanzenöle wie beispielsweise Sojaöl, Rapsöl, Sonnenblumenöl, Ester und Salze natürlicher Carbonsäuren wie beispielsweise Methyl-Oleat, sog. methylated seed oils, nichtionische Tenside wie ethoxylierte Alkohole, ethoxylierte Phenole, Fettaminethoxylate sowie deren Gemische.

Zur besseren Verarbeitung können weitere Hilfs- und Zusatzmittel zugegeben werden. Als Hilfs- und Zusatzmittel haben sich folgende Komponenten bewährt:

Lösungsmittel, Entschäumer, Puffersubstanzen, Verdicker, Spreitmittel, kompatibilitätsfördernde Mittel.

Beispiele und Marken für Adjuvants und Hilfs- und Zusatzmittel werden beschrieben in Farm Chemicals Handbook 1997; Meister Publishing 1997 S. C10 "adjuvant" oder 1998 Weed Control Manual S. 86.

Die erfindungsgemäße Mischung eignet sich als Herbizid. Die herbizide Mischung bekämpft Pflanzenwuchs auf Nichtkulturflächen sehr gut, besonders bei hohen Aufwandmengen. In Kulturen wie Weizen, Reis, Mais, Soja und Baumwolle wirkt sie gegen Unkräuter und Schadgräser, ohne die Kulturpflanzen nennenswert zu schädigen. Dieser Effekt tritt vor allem bei niedrigen Aufwandmengen auf. In Abhängigkeit von der jeweiligen Applikationsmethode kann die herbizide Mischung noch in einer weiteren Zahl von Kulturpflanzen zur Beseitigung unerwünschter Pflanzen eingesetzt werden. In Betracht kommen beispielsweise folgende Kulturen:

Allium cepa, Ananas comosus, Arachis hypogaea, Asparagus officinalis, Beta vulgaris spec. altissima, Beta vulgaris spec. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa, Phaseolus lunatus, Phaseolus vulgaris, Picea abies, Pinus spec., Pisum sativum, Prunus avium, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera und Zea mays.

Darüber hinaus kann die herbizide Mischung auch in Kulturen, die durch Züchtung einschließlich gentechnischer Methoden gegen die Wirkung von Herbiziden tolerant sind, verwandt werden.

Die Applikation der herbiziden Mischung kann im Vorlauf- oder im Nachauflaufverfahren erfolgen. Ist die herbizide Mischung für gewisse Kulturpflanzen weniger verträglich, so können Ausbringungstechniken angewandt werden, bei weicnen die herbizide Mischung mit Hilfe der Spritzgeräte so gespritzt wird, daß die Blätter der empfindlichen Kulturpflanzen nach Möglichkeit nicht getroffen werden, während die herbizide Mischung auf die Blätter darunter wachsender unerwünschter Pflanzen oder die unbedeckte Bodenfläche gelangen (post-directed, lay-by).

Die herbizide Mischung kann beispielsweise in Form von direkt versprühbaren wäßrigen Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feinste Verteilung der erfindungsgemäßen herbiziden Mischung gewährleisten.

Als inerte Zusatzstoffe kommen im Wesentlichen in Betracht. Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Paraffin, Tetrahydronaphthalin, alkylierte Naphtaline oder deren Derivate, alkylierte Benzole oder deren Derivate, Alkohole wie Methanol, Ethanol, Propanol, Butanol, Cyclohexanol, Ketone wie Cyclohexanon oder stark polare Lösungsmittel, z.B. Amine wie N-Methylpyrrolidon oder Wasser.

Wäßrige Anwendungsformen können aus Emulsionskonzentraten, Suspensionen, Pasten, netzbaren Pulvern oder wasserdispergierbaren Granulaten durch Zusatz von Wasser bereitet werden. Zur Herstellung von Emulsionen, Pasten oder Öldispersionen kann die herbizide Mischung als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure sowie von Fettsäuren, Alkyl- und Alkylarylsulfonaten, Alkyl-, Laurylether und Fettalkoholsulfaten, sowie Salze sulfatierter Hexa-, Hepta- und Octadecanolen sowie von Fettalkoholglykolether, Kondensationsprodukte von sulfoniertem Naphthalin und seiner Derivate mit Formaldehyd, Kondensationsprodukte des Naphthalins bzw, der Naphthalinsulfonsäure mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxyproylennalkylether, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der herbiziden Mischung mit einem festen Trägerstoff hergestellt werden.

Granulate, z.B. Umhüllungs-, Imprägnierungs- und Homogengranulate können durch Bindung der herbiziden Mischung an feste Trägerstoffe hergestellt werden. Feste Trägerstoffe sind Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Konzentrationen der herbiziden Mischung in den anwendungsfertigen Zubereitungen können in weiten Bereichen variiert werden. Im allgemeinen enthalten die Formulierungen etwa von 0,001 bis 98 Gew.-%, vorzugsweise 0,01 bis 95 Gew.-% der herbiziden Mischung. Die Komponenten der Mischung werden dabei in einer Reinheit von 90% bis 100%, vorzugsweise 95% bis 100% (nach NMR-Spektrum) eingesetzt.

Die erfindungsgemäße herbizide Mischung kann beispielsweise wie folgt formuliert werden:

### A) Konzentrate für die Herstellung der erfindungsgemäßen Mischung

### 1) Suspensionskonzentrat

108 g 4-[2-Chlor-3-(4,5-dihydroisoxazol-3-Yl)-4-methylsulfonylbenzoyl]-1-methyl-5-hydroxy-1H-pyrazol (techn. 92%), 20 g/l Wettol® D1 der Fa. BASF, 30 g Pluronic® PE 10500 der BASF AG, 3 g Kelzan®, 1,4 g Kathon® MK, 70 g 1,2-Propylenglykol und 5 g Siliconemulsion der Fa. Wacker wurden mit Wasser auf 1 1 aufgefüllt und anschließend in einer Kugelmühle auf eine Teilchengröße von 60 % < 2 Mikron vermahlen.

### 2) Suspensionskonzentrat

503 g 4-[2-Chlor-3-(4,5-dihydroisoxazol-3-Yl)-4-methylsulfonylbenzoyl]-1-methyl-5-hydroxy-1H-pyrazol (techn. 99%), 20 g/l Wettol® DI der Fa. BASF, 30 g Pluronic® PE 10500 der BASF AG, 3 g Kelzan®, 1,4 g Kathon® MK, 70 g 1,2-Propylenglykol und 5 g Siliconemulsion der Fa. Wacker wurden mit Wasser auf 1 l aufgefüllt und anschließend in einer Kugelhülle auf eine Teilchengröße von 60 % < 2 Mikron vermahlen.

### 3) Wasserlösliches Konzentrat der Komponente a)

100 g des Wirkstoffs 4-[2∼Chlor∼3∼(4,5-dihydroisoxazol-3-yl)-4-methylsulfonyl-benzoyl]-1-methyl-5-hydroxy-1H-pyrazol. (99 % techn.) werden in ca. 800 ml Wasser dispergiert. Mit verdünnter Kalilauge (KOH) wird der Wirkstoff neutralisiert und die Formulierung auf pH 8,5 eingestellt. Danach wird das Produkt auf 1 Liter aufgefüllt.

### B) Erfindungsgemäße herbizide Mischungen

### 4) Suspensionskonzentrat

100 ml des unter 2) hergestellten Konzentrats wurden mit 220 ml Wasser und 360 ml Ammonium-Nitrat-Harnstofflösung (ENSOL® 28, BASF AG) vermischt. Mittels eines Intensivrührers wurden in diese Mischung eine Lösung von 14 g eines Ca-Dodecylbenzolsulfonats (Wettol® EM l, BASF AG) 14 g eines Rizinunsölethoxylats mit 40 Mol EO (Wettol® EM 31, BASF AG) und 250 ml eines Adipinsäuredioctylesters (Plastomoll® DOA, BASF AG) ein emulgiert. Man erhielt eine stabile Suspension des 4-[2-Chlor-3-(4,5-dihydroisoxazol-3-yl)-4-methylsulfonyl-benzoyl]-1-methyl-5-hydroxy-1H-pyrazol mit einem Wirkstoffgehalt von 50 g/l.

### 5) Suspensionskonzentrat

100 ml des unter 2) hergestellten Konzentrats wurden mit 220 ml Wasser und 360 ml Ammonium-Nitrat-Harnstofflösung (ENSOL® 28, BASF AG) vermischt. Mittels eines intensivrührers wurden in diese Mischung 250 ml Methyloleat ein emulgiert. Man erhielt eine stabile Suspension des 4-[2-Chlor-3-(4,s-dihydroisoxazol-3-yl)-4-methylsulfonyl-benzoyl]-1-methyl-5-hydroxy-1H-pyrazol mit einem Wirkstoffgehalt von 50 g/l.

### 6) Wasserdispergierbares Granulat

50 g des Wirkstoffs 4-[2-Chlor-3-(4,s-dihydroisoxazol-3-yl)-4-methylsulfonyl-benzoyl]-1-methyl-5-hydroxy-1H-pyrazol (99 % techn.), 50 g Naphthalinsulfonsäure-Formaldehyd-kondensat 10 g Na-Ligninsulfonat und 600 g Ammoniumsulfat werden inniglich vermischt und in einer Luf tstrahlmühle vermahlen. Das erhaltene Pulver wird in einem Mischer mit 31 g Ethylhexylglucosid (65 %ige wss. Lösung) vermischt. Das Gemisch wird in einem Extruder (DGL-1 Fa. Fitzpatrick, Belgien, Lochdurchmesser 0,8 mm) extrudiert. Ggf. wird hierfür noch mehr Flüssigkeit zugefügt um eine Extrudierbarkeit zu erreichen. Die Granulate werden getrocknet und man erhält ein wasserdispergierbares Granulat mit einem Wirkstoffgehalt von 5 %.

### 7) Wasserlösliches Konzentrat

50 g des Wirkstoffs 4-[2-Chlor-3-(4,5-dihydroisoxazol-3-yl)-4-methylsulfonyl-benzoyl]1-methyl-5-hydroxy-1H-pyrazol. (99 % techn.) werden in 200 ml Wasser dispergiert und mit verdünnter Kalilauge (KOH) neutralisiert. Dazu werden 360 g Ammonium-Nitratharnstofflösung (ENSOL® 28, BASF AG) und 250 g Lutensol® ON 80 (BASF AG) gegeben. Das Produkt wird mit KOH auf pH 8,5 eingestellt und mit Wasser auf 1 Liter aufgefüllt.

### 8) Wasserlösliches Konzentrat

100 g des Wirkstoffs 4-[2-Chlor∼3∼(4,5-dihYdroisoxazol-3-yl) 4-methylsulfonyl-benzoyl]-1-methyl-5-hydroxy-1H-pyrazol. (99 % techn.) werden in ca. 300 ml Wasser dispergiert. Mit verdünnter Kalilauge (KOH) wird der Wirkstoff neutralisiert und die Formulierung auf pH 8,5 eingestellt. Dazu werden 500 g AG 6202 gerührt. Nach der Homogenisierung wird der pH-Wert noch einmal kontrolliert und eventuell korrigiert. Danach wird das Produkt auf 1 Liter aufgefüllt.

Zur Verbreiterung des Wirkungsspektrums und zur Erzielung synergistischer Effekte kann die herbizide Mischung mit zahlreichen Vertretern anderer herbizider oder wachstumsregulierender Wirkstoffgruppen gemischt und gemeinsam ausgebracht werden. Beispielsweise kommen als Mischungspartner 1,2,4-Thiadiazole, 1,3,4-Thiadiazole, Amide, Aminophosphorsäure und deren Derivate, Aminotriazole, Anilide, (Het) -Aryloxyalkansäure und deren Derivate, Benzoesäure und deren Derivate, Benzothiadiazinone, 2-Aroyl-1,3-cyclohexandione, Hetaryl-Aryl-Ketone, Benzylisoxazolidinone, Meta-CF₃-phenylderivate, Carbamate, Chinolincarbonsäure und deren Derivate Dihydrobenzofurane, Dihydrofuran-3-one, Dinitroaniline, Dinitrophenole, Diphenylether, Dipyridyle, Halogencarbonsäuren und deren Derivate, Harnstoffe, 3-Phenyluracile, Imidazole, Imidazolinone, N-Phenyl-3,4,5,6-tetrahydrophthalimide, Oxadiazole, Oxirane, Phenole, Aryloxy- oder Heteroarylphenoxyphenoxypropionsäureester, Phenylessigsäure und deren Derivate, Phenylpropionsäure und deren Derivate, Pyrazole, Phenylpyrazole, Pyridazine, Pyridincarbonsäure und deren Derivate, Pyrimidylether, Sulfonylharnstoffe, Triazine, Triazinone, Triazolinone, Triazolcarboxamide, Uracile in Betracht.

Außerdem kann es von Nutzen sein, die herbizide Mischung allein oder in Kombination mit anderen herbiziden auch noch mit weiteren Pflanzenschutzmitteln gemischt, gemeinsam auszubringen, beispielsweise mit Mitteln zur Bekämpfung von Schädlingen oder phytopabhogenen Pilzen bzw. Bakterien. Von Interesse ist ferner die Mischbarkeit mit Mineralsalzlösungen, welche zur Behebung von Ernährungs- und Spurenelementmängeln eingesetzt werden.

Die Aufwandmenge an herbizider Mischung beträgt je nach Bekämpfungsziel, Jahreszeit, Zielpflanzen und Wachstums Stadium 0,001 bis 1,0, vorzugsweise 0,01 bis 0,5 kg/ha aktive Substanz (a. S.), bezogen auf die reinen Komponenten der herbiziden Mischung.

### Anwendungsbeispiel

Die herbizide Wirkung der erfindungsgemäßen Mittel ließ sich durch Gewächshausversuche zeigen:

Als Kulturgefäße dienten Plastiktöpfe mit lehmigem Sand mit etwa 3,0 % Humus als Substrat. Die Samen der Testpflanzen wurden nach Arten getrennt eingesät.

Bei Vorauflaufbehandlung wurde die in wasser suspendierte oder emulgierte herbizide Mischung direkt nach Einsaat mittels fein verteilender Düsen aufgebracht. Die Gefäße wurden leicht beregnet, um Keimung und Wachstum zu fördern, und anschließend mit durchsichtigen Plastikhauben abgedeckt, bis die Pflanzen angewachsen waren. Diese Abdeckung bewirkt ein gleichmäßiges Keimen der Testpflanzen, sofern dies nicht durch die herbizide Mischung beeinträchtigt wurde.

Zum Zweck der Nachauflaufbehandlung wurden die Testpflanzen je nach Wuchsform erst bis zu einer Wuchshöhe von 3 bis 15 cm angezogen und dann mit der in Wasser suspendierten oder emulgierten herbiziden Mischung behandelt. Die Testpflanzen wurden dafür entweder direkt gesät und in den gleichen Gefäßen aufgezogen oder sie wurden erst als Keimpf lanzen getrennt angezogen und einige Tage vor der Behandlung in die Versuchsgefäße verpflanzt.

Die Pflanzen wurden artenspezifisch bei Temperaturen von 10 - 25°C bzw. 20 - 35°C gehalten. Die Versuchsperiode erstreckte sich über 2 bis 4 Wochen. Während dieser Zeit wurden die Pflanzen gepflegt, und ihre Reaktion auf die einzelnen Behandlungen wurde ausgewertet.

Bewertet wurde nach einer Skala von 0 bis 100. Dabei bedeutet 100 kein Aufgang der Pflanzen bzw. völlige Zerstörung zumindest der oberirdischen Teile und 0 keine Schädigung oder normaler Wachstumsverlauf.

Die in den Gewächshausversuchen verwendeten Pflanzen setzten sich aus folgenden Arten zusammen:

| Abkürzung | Lateinischer Name | Deutscher Name | Englischer Name |
|---|---|---|---|
| ABUTH | Abutilon theophrasti | Chinesischer Hanf | velvet leaf |
| CHEAL | Chenopodium album | Weißer Gänsefuß | lainbsguarters (goosefoot) |
| ECHCG | Echinochloa crusgalli | Hühnerhirse | barnyardgrass |
| POLPE | Polygonum persicaria | Flohknöterich | ladysthumb |
| SETVI | Setaria viridis | Grüne Borstenhirse | green foxtail |
| ZEAMX | Zea mays | Mais | corn |

### Beispiel 1

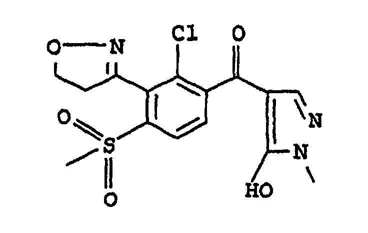

**Tabelle 1**

| Selektive herbizide Aktivität im Nachlaufverfahren im Gewächshaus | | | |
|---|---|---|---|
| | | Phytotoxizität | |
| Wirkstoff | AMM kg/ha a.S. | ZEAMX | CHEAL |
| BSP. 1 | 0.0078 | 0 | 20 |
| BSP. 1 + Pluronic® PE 6400 | 0.0078 + 0 0.25 | 0 | 90 |
| BSP.1 + Pluronic® PE 6400 + ENSOL® 28 | 0.0078 + 0.25 + 0.375 | 0 | 95 |

**Tabelle 2**

| Selektive herbizide Aktivität im Nachlaufverfahren im Gewächshaus | | | |
|---|---|---|---|
| | | Phytotoxizität | |
| Wirkstoff | AWM kg/ha a.S. | ZEAMX | CHEAL |
| BSP. 1 | 0.0625 | 0 | 50 |
| BSP. 1 + Pluronic® PE 6800 | 0.0625 + 0.25 | 0 | 75 |
| BSP.1 + Pluronic® PE 6800 + ENSOL® 28 | 0.0625 + 0.25 + 0.375 | 0 | 80 |

**Tabelle 3**

| Selektive herbizide Aktivität im Nachlaufverfahren im Gewächshaus | | |
|---|---|---|
| | | Phytotoxizität |
| Wirkstoff | AWM kg/ha a.S. | ECHCG |
| BSP. 1 | 0.0625 | 50 |
| BSP. 1 + Agrimul® PG 2067 | 0.0625 + 0.25 | 75 |
| BSP.1 + Agrimul® PG 2067 + ENSOL® 28 | 0.0625 + 0.25 + 0.375 | 80 |

**Tabelle 4**

| Selektive herbizide Aktivität im Nachlaufverfahren im Gewächshaus | | |
|---|---|---|
| | | Phytotoxizität |
| Wirkstoff | AWM kg/ha a.S. | ABUTH |
| BSP. 1 | 0.0156 | 20 |
| BSP. 1 + Agrimul® PG 2067 | 0.0156 + 0.25 | 70 |
| BSP.1 + Agrimul® PG 2067 + ENSOL® 28 | 0.0156 + 0.25 + 0.375 | 80 |

**Tabelle 5**

| Selektive herbizide Aktivität im Nachlaufverfahren im Gewächshaus | | | |
|---|---|---|---|
| | | Phytotoxizität | |
| Wirkstoff | AWM kg/ha a.S. | ECHCG | ABUTH |
| BSP. 1 | 0.0312 | 030 | 75 |
| BSP. 1 + Agrimul® PG 600 | 0.0312 + 0.25 | 40 | 80 |
| BSP.1 + Agrimul® PG 600 + ENSOL® 28 | 0.0312 + 0.25 + 0.375 | 70 | 85 |

**Tabelle 6**

| Selektive herbizide Aktivität im Nachlauf verfahren im Gewächshaus | | |
|---|---|---|
| | | Phytotoxizität |
| Wirkstoff | AWM kg/ha a.S. | CHEAL |
| BSP. 1 | 0.0078 | 20 |
| BSP. 1 + Agrimul® PG 600 | 0.0078 + 0.25 | 70 |
| BSP.1 + Agrimul® PG 600 + ENSOL® 28 | 0.0078 + 0.25 + 0.375 | 98 |

**Tabelle 7**

| Selektive herbizide Aktivität im Nachlauf verfahren im Gewächshaus | | |
|---|---|---|
| | | Phytotoxizität |
| Wirkstoff | AWM kg/ha a.S. | CHEAL |
| BSP. 1 | 0.0156 | 20 |
| BSP. 1 + Lutensol® GD 70 | 0.0156 + 0.25 | 90 |
| BSP.1 + Lutensol® PG 600 + ENSOL® 28 | 0.0156 + 0.25 + 0.375 | 95 |

**Tabelle 8**

| Selektive herbizide Aktivität im Nachlaufverfahren im Gewächshaus | | | |
|---|---|---|---|
| | | Phytotoxizität | |
| Wirkstoff | AWM kg/ha a.S. | ZEAMX | CHEAL |
| BSP. 1 | 0.0625 | 0 | 50 |
| BSP. 1 + AG® 6202 | 0.0625 + 0.25 | 0 | 60 |
| BSP.1 + AG® 6202 + EMSOL® 28 | 0.0625 + 0.25 + 0.375 | 0 | 80 |

**Tabelle 9**

| Selektive herbizide Aktivität im Nachlaufverfahren im Gewächshaus | | |
|---|---|---|
| | | Phytotoxizität |
| Wirkstoff | AWM kg/ha a.S. | ECHCG |
| BSP. 1 | 0.0625 | 50 |
| BSP. 1 + Lutensol® ON 30 | 0.0625 + 0.25 | 90 |
| BSP.1 + Lutensol® ON 30 + ENSOL® 28 | 0.0625 + 0.25 + 0.375 | 100 |

**Tabelle 10**

| Selektive herbizide Aktivität im Nachlaufverfahren im Gewächshaus | | |
|---|---|---|
| | | Phytotoxizität |
| Wirkstoff | AWM kg/ha a.S. | CHEAL |
| BSP. 1 | 0.0078 | 20 |
| BSP. 1 + Lutensol® ON 80 | 0.0078 + 0.25 | 80 |
| BSP.1 + Lutensol® ON 80 + ENSOL® 28 | 0.0078 + 0.25 + 0.375 | 98 |

**Tabelle 11**

| Selektive herbizide Aktivität im Nachlaufverfahren im Gewächshaus | | | |
|---|---|---|---|
| | | Phytotoxizität | |
| Wirkstoff | AWM kg/ha a.S. | SETVI | CHEAL |
| BSP. 1 | 0.0078 | 30 | 20 |
| BSP. 1 + Lutensol® ON 110 | 0.0078 + 0.25 | 40 | 60 |
| BSP.1 + Lutensol® ON 110 + ENSOL® 28 | 0.0078 + 0.25 + 0.375 | 95 | 95 |

**Tabelle 12**

| Selektive herbizide Aktivität im Nachlaufverfahren im Gewächshaus | | |
|---|---|---|
| | | Phytotoxizität |
| Wirkstoff | AWM kg/ha a.S. | CHEAL |
| BSP. 1 | 0.0156 | 20 |
| BSP. 1 + Lutensol® TO 8 | 0.0156 + 0.25 | 50 |
| BSP.1 + Lutensol® TO 8 + ENSOL® 28 | 0.0156 + 0.25 + 0.375 | 80 |

**Tabelle 13**

| Selektive herbizide Aktivität im Nachlaufverfahren im Gewächshaus | | |
|---|---|---|
| | | Phytotoxizität |
| Wirkstoff | AWM kg/ha a.S. | CHEAL |
| BSP. 1 | 0.0156 | 20 |
| BSP. 1 + Pluriol® E 600 | 0.0156 + 0.25 | 60 |
| BSP.1 + Pluriol® E 600 + EMSOL® 28 | 0.0156 + 0.25 + 0.375 | 98 |

**Tabelle 14**

| Selektive herbizide Aktivität im Nachlaufverfahren im Gewächshaus | | |
|---|---|---|
| | | Phytotoxizität |
| Wirkstoff | AWM kg/ha a.S. | CHEAL |
| BSP. 1 | 0.0156 | 20 |
| BSP. 1 + Pluriol® E 4000 | 0.0156 + 0.25 | 90 |
| BSP.1 + Pluriol® E 4000 + ENSOL® 28 | 0.0156 + 0.25 + 0.375 | 98 |

**Tabelle 15**

| Selektive herbizide Aktivität im Nachlaufverfahren im Gewächshaus | | |
|---|---|---|
| | | Phytotoxizität |
| Wirkstoff | AWM kg/ha a.S. | ECHCG |
| BSP. 1 | 0.0625 | 50 |
| BSP. 1 + Glycerox® L 8 | 0.0625 + 0.25 | 85 |
| BSP.1 + Glycerox® L 8 + ENSOL® 28 | 0.0625 + 0.25 + 0.375 | 90 |

**Tabelle 16**

| Selektive herbizide Aktivität im Nachlaufverfahren im Gewächshaus | | |
|---|---|---|
| | | Phytotoxizität |
| Wirkstoff | AWM kg/ha a.S. | ABUTH |
| BSP. 1 | 0.0156 | 20 |
| BSP. 1 + Glycerox® L 8 | 0.0156 + 0.25 | 70 |
| BSP.1 + Glycerox® L 8 + ENSOL® 28 | 0.0156 + 0.25 + 0.375 | 80 |

**Tabelle 17**

| Selektive herbizide Aktivität im Nachlaufverfahren im Gewächshaus | | | |
|---|---|---|---|
| | | Pbytotoxizität | |
| Wirkstoff | AWM kg/ha a.S. | SETVI | POLPE |
| BSP. 1 | 0.0078 | 30 | 20 |
| BSP. 1 + Glycerox® HE | 0.0078 + 0.25 | 20 | 40 |
| BSP.1 + Glycerox® HE + ENSOL® 28 | 0.0078 + 0.25 + 0.375 | 95 | 95 |

**Tabelle 18**

| Selektive herbizide Aktivität im Nachlaufverfahren im Gewächshaus | | |
|---|---|---|
| | | Phytotoxizität |
| Wirkstoff | AWM kg/ha a.S. | POLPE |
| BSP. 1 | 0.0078 | 70 |
| BSP. 1 + Plastomoll® DOA | 0.0078 + 0.25 | 80 |
| BSP.1 + Plastomoll® DOA + ENSOL® 28 | 0.0078 + 0.25 + 0.375 | 95 |

**Tabelle 19**

| Selektive herbizide Aktivität im Nachlauf verfahren im Gewächshaus | | | |
|---|---|---|---|
| | | Phytotoxizität | |
| Wirkstoff | AWM kg/ha a.S. | SETVI | POLPE |
| BSP. 1 | 0.0078 | 40 | 70 |
| BSP. 1 + Lutensol® TO 15 | 0.0078 + 0.25 | 60 | 80 |
| BSP.1 + Lutensol® TO 15 + ENSOL® 28 | 0.0078 + 0.25 + 0.375 | 95 | 90 |

**Tabelle 20**

| Selektive herbizide Aktivität im Nachlaufverfahren im Gewächshaus | | | |
|---|---|---|---|
| | | Phytotoxizität | |
| Wirkstoff | AWM kg/ha a.S. | ZEAMX | SETVI |
| BSP. 1 | 0.0078 | 0 | 40 |
| BSP. 1 + Lutensol® AT 11 | 0.0078 + 0.25 | 0 | 55 |
| BSP.1 + Lutensol® AT 11 + ENSOL® 28 | 0.0078 + 0.25 + 0.375 | 0 | 95 |

**Tabelle 21**

| Selektive herbizide Aktivität im Nachlaufverfahren im Gewächshaus | | | |
|---|---|---|---|
| | | Phytotoxizität | |
| Wirkstoff | AWM kg/ha a.S. | SETVI | POLPE |
| BSP. 1 | 0.0078 | 40 | 70 |
| BSP. 1 + Lutensol® AT 25 | 0.0078 + 0.25 | 45 | 90 |
| BSP.1 + Lutensol® AT 25 + ENSOL® 28 | 0.0078 + 0.25 + 0.375 | 90 | 95 |

Legende zu den eingesetzten Adjuvants:

| Name | | |
|---|---|---|
| Pluronic® PE 6400 | BASF AG | EO/PO Blockcopolymer |
| Pluronic® PE 6800 | BASF AG | EO/PO Blockcopolymer |
| Agrimul® PG 2067 | Henkel | Alkylglykosid APG |
| Agrimul® PG 600 | Henkel | Alkylglykosid APG |
| AG® 6202 | Akzo | Alkylglykosid APG |
| Lutensol® GD 70 | BASF AG | Alkylglykosid APG |
| Lutensol® ON 30 | BASF AG | Alkylethoxylat |
| Lutensol® ON 80 | BASF AG | Alkylethoxylat |
| Lutensol® ON 110 | BASF AG | Alkylethoxylat |
| Lutensol® TO 8 | BASF AG | Alkylethoxylat |
| Lutensol® TO 15 | BASF AG | Alkylethoxylat |
| Lutensol® AT 11 | BASF AG | Alkylethoxylat |
| Lutensol® AT 25 | BASF AG | Alkylethoxylat |
| Pluriol® E 600 | BASF AG | Polyethylenglykol |
| Pluriol® E 4000 | BASF AG | Polyethylenglykol |
| Plastomoll® DOA | BASF AG | Dioctyladipat |
| Glycerox® L 8 | Croda | ethoxyliertes Monoglycerid |
| Glycerox® HE | Croda | ethoxyliertes Monoglycerid |
| ENSOL® 28 | BASF AG | Ainmoniumnitrat-Harnstofflösung (28% Ges.N) |

Aus den Werten der Tabelle 1 bis 21 geht eindeutig die synergistische Wirkung der erfindungsgemäßen herbiziden Mischung hervor im Vergleich zu den jeweiligen Zweiermischungen und gegenüber dem reinen Wirkstoff bei gleichzeitig hoher Selktivität gegenüber der Kulturpflanze Mais.

## Patentansprüche

1. Herbizide Mischung, enthaltend
a) eine herbizid wirksame Menge eines 3-heterocyclyl-substituierten Benzoylderivates der Formel I 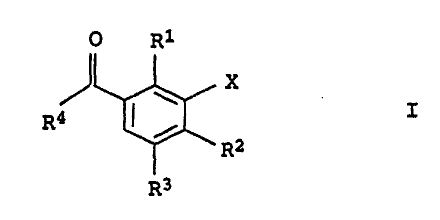 in der die Variablen folgende Bedeutung haben:
R¹,R² Wasserstoff, Halogen, C₁-C₆-Alkyl, C₁-C₆-Alkylthio, C₁-C₆-Alkylsulfinyl, C₁-C₆-Alkylsulfonyl C₁-C₆-Halogenalkyl, C₁-C₆-Alkoxy, C₁-C₆-Halogenalkoxy;
R³ Wasserstoff, Halogen, C₁-C₆-Alkyl;
X Heterocyclus aus der Gruppe Isoxazolyl, 4,5-Dihydroisoxazolyl und Thiazolyl, wobei der Heterocyclus gegebenenfalls einfach oder mehrfach mit Halogen, C₁-C₆-Alkyl, C₁-C₄-Alkoxy, C₁-C₄-Halogenalkyl, C₁-C₄-Halogenalkoxy, C₁-C₄-Alkylthio substituiert sein kann;
R⁴ ein in 4-Stellung verknüpftes Pyrazol der Formel II 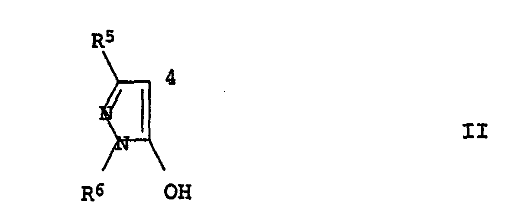
wobei
R⁵ Wasserstoff oder C₁-C₆-Alkyl,
R⁶ C₁-C₆-Alkyl
bedeuten, oder deren umweltverträglichen Salze;
b) einen stickstoffhaltigen Dünger in einer synergistisch wirksamen Menge und
c) ein Adjuvant in einer synergetisch wirksamen Menge.

2. Herbizide Mischung nach Anspruch 1, enthaltend ein 3-heterocyclyl-substituiertes Benzoylderivat der Formel I nach Anspruch 1, wobei R³ Wasserstoff bedeutet.

3. Herbizide Mischung nach Anspruch 1 oder 2, enthaltend ein 3-heterocyclylsubstituiertes Benzoylderivat der Formel I nach Anspruch 1, wobei
R¹,R² Halogen, C₁-C₆-Alkyl, C₁-C₆-Alkylthio, C₁-C₆-Alkylsulfinyl, C₁-C₆-Alkylsulfonyl
bedeuten.

4. Herbizide Mischung nach einem der Ansprüche 1 bis 3, enthaltend ein 3-heterocyclyl-substituiertes Benzoylderivat der Formel I nach Anspruch 1, wobei X für Isoxazolyl und 4,5-Dihydroisoxazolyl steht, die ggf. durch C₁-C₆-Alkyl substituiert sein können.

5. Herbizide Mischung nach einem der Ansprüche 1 bis 4, enthaltend ein 3-heterocyclyl-substituiertes Benzoylderivat der Formel I nach Anspruch 1, wobei X für Isoxazol-5-yl, 3-Methyl-isoxazol-5-yl, 4,5 Dihydroisoxazol-3-yl, 4,5-Dihydro-5-methyl-isoxazol-3-yl, 4,5-Dihydro-5-ethyl-isoxazol-3-yl, 4,5-dihydro-4,5-dimethylisoxazol-3-yl steht.

6. Herbizide Mischung nach Anspruch 1, enthaltend 4-[2-Chlor-3-(4,5-dihydroisoxazol-3-yl)-4-methylsulfonyl-benzoyl]-1-methyl-5-hydroxy-lH-pyrazol.

7. Herbizide Mischung nach Anspruch 1, enthaltend 4-[2-Methyl-3-(4,5-dihydroisoxazol-3-yl)-4-methylsulfonylbenzoyl]-1-methyl-5-hydroxy-lH-pyrazol.

8. Herbizide Mischung nach einem der Ansprüche 1 bis 7, enthaltend einen stickstoffhaltigen Dünger b) ausgewählt aus der Reihe Ammoniak, Ammoniumsalze, Harnstoff, Thioharnstoff und deren Mischungen.

9. Herbizide Mischung nach einem der Ansprüche 1 bis 8, enthaltend
0,5 - 90 Gew.-% des 3-heterocyclyl-substituierten Benzoyldesivates a)
5 - 94,5 Gew.-% des stickstoffhaltigen Düngers b);
5 - 50 Gew. -% des Adjuvants c).

10. Verfahren zur Herstellung einer herbiziden Mischung gemäß einem der Ansprüche 1 bis 9, **dadurch gekennzeichnet, daß** man die Komponenten a) bis c) der herbiziden Mischung miteinander mischt.

11. verfahren zur Bekämpfung unerwünschten Pflanzenwuchses, **dadurch gekennzeichnet, daß** man eine herbizid wirksame Menge der Komponenten a) bis c) der herbiziden Mischung gemäß einem der Ansprüche 1 bis 9 miteinander mischt und auf die Pflanzen oder deren Lebensraum einwirken läßt.

## Claims

1. A herbicidal mixture comprising
a) a herbicidally active amount of a 3-heterocyclyl-substituted benzoyl derivative of the formula I 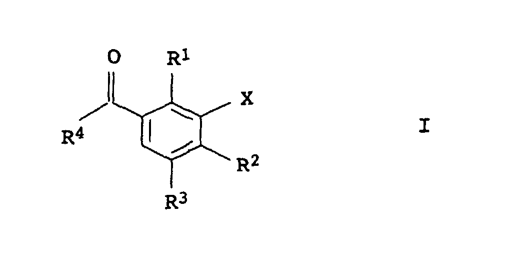 in which the variables have the following meanings:
R¹,R² are hydrogen, halogen, C₁-C₆-alkyl, C₁-C₆-alkylthio, C₁-C₆-alkylsulfinyl, C₁-C₆-alkylsulfonyl, C₁-C₆-haloalkyl, C₁-C₆-alkoxy, C₁-C₆-haloalkoxy;
R³ is hydrogen, halogen, C₁-C₆-alkyl;
X is a heterocycle from amongst the group consisting of isoxazolyl, 4,5-dihydroisoxazolyl and thiazolyl, it being possible for the heterocycle to be optionally monosubstituted or polysubstituted by halogen, C₁-C₆-alkyl, C₁-C₄-alkoxy, C₁-C₄-haloalkyl, C₁-C₄-haloalkoxy, C₁-C₄-alkylthio;
R⁴ is a pyrazole of the formula II 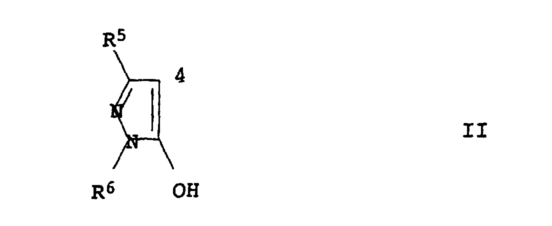
which is linked in the 4-position and where
R⁵ is hydrogen or C₁-C₆-alkyl,
R⁶ is C₁-C₆-alkyl,
or their environmentally compatible salts;
b) a nitrogenous fertilizer in a synergistically effective amount and
c) an adjuvant in a synergistically effective amount.

2. A herbicidal mixture as claimed in claim 1, comprising a 3-heterocyclyl-substituted benzoyl derivative of the formula I as claimed in claim 1 where R³ is hydrogen.

3. A herbicidal mixture as claimed in claim 1 or 2, comprising a 3-heterocyclyl-substituted benzoyl derivative of the formula I as claimed in claim 1, where
R¹,R² are halogen, C₁-C₆-alkyl, C₁-C₆-alkylthio, C₁-C₆-alkylsulfinyl, C₁-C₆-alkylsulfonyl.

4. A herbicidal mixture as claimed in any one of claims 1 to 3, comprising a 3-heterocyclyl-substituted benzoyl derivative of the formula I as claimed in claim 1 where X is isoxazolyl and 4,5-dihydroisoxazolyl, each of which can optionally be substituted by C₁-C₆-alkyl.

5. A herbicidal mixture as claimed in any one of claims 1 to 4, comprising a 3-heterocyclyl-substituited benzoyl derivative of the formula I as claimed in claim 1 where X is isoxazol-5-yl, 3-methylisoxazol-5-yl, 4,5-dihydroisoxazol-3-yl, 4,5-dihydro-5-methylisoxazol-3-yl, 4,5-dihydro-5-ethylisoxazol-3-yl, 4,5-dihydro-4,5-dimethylisoxazol-3-yl.

6. A herbicidal mixture as claimed in claim 1, comprising 4-[2-chloro-3-(4,5-dihydroisoxazol-3-yl)-4-methylsulfonylbenzoyl]-1-methyl-5-hydroxy-1H-pyrazole.

7. A herbicidal mixture as claimed in claim 1, comprising 4-[2-methyl-3-(4,5-dihydroisoxazol-3-yl)-4-methylsulfonylbenzoyl]-1-methyl-5-hydroxy-1H-pyrazole.

8. A herbicidal mixture as claimed in any one of claims 1 to 7, comprising a nitrogenous fertilizer b) selected from the series consisting of ammonia, ammonium salts, urea, thiourea and mixtures of these.

9. A herbicidal mixture as claimed in any one of claims 1 to 8, comprising
0.5 - 90% by weight of the 3-heterocyclyl-substituted benzoyl derivative a);
5 - 94.5% by weight of the nitrogenous fertilizer b);
5 - 50% by weight of the adjuvant c).

10. A process for the preparation of a herbicidal mixture as claimed in any one of claims 1 to 9, which comprises mixing the components a) to c) of the herbicidal mixture with each other.

11. A method of controlling undesirable vegetation, which comprises mixing a herbicidally active amount of the components a) to c) of the herbicidal mixture as claimed in any one of claims 1 to 9 with each other and allowing the mixture to act on the plants or their environment.

## Revendications

1. Mélange herbicide, contenant
a) une quantité à efficacité herbicide d'un dérivé de benzoyle à substitution 3-hétérocyclyle, de formule I 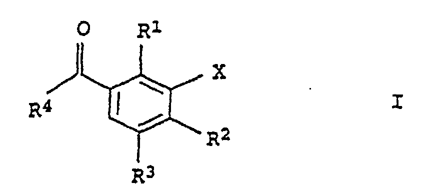 dans laquelle les variables ont la signification suivante:
R¹,R² hydrogène, halogène, alkyle en C₁-C₆, alkylthio en C₁-C₆, alkylsulfinyle en C₁-C₆, alkylsulfonyle en C₁-C₆, halogénoalkyle en C₁-C₆, alcoxy en C₁-C₆, halogénoalcoxy en C₁-C₆;
R³ hydrogène, halogène, alkyle en C₁-C₆;
X hétérocycle du groupe des isoxazolyle, 4,5-dihydroisoxazolyle et thiazolyle, tandis que l'hétérocycle peut éventuellement être substitué une ou plusieurs fois par des substituants halogène, alkyle en C₁-C₆, alcoxy en C₁-C₄, halogénoalkyle en C₁-C₄, halogénoalcoxy en C₁-C₄, alkylthio en C₁-C₄;
R⁴ un pyrazole lié en position 4, de formule II 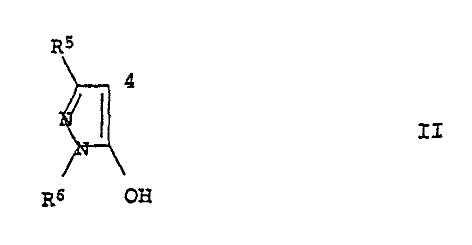
où
R⁵ désigne l'hydrogène ou un alkyle en C₁-C₆,
R⁶ représente un alkyle en C₁-C₆,
ou leurs sels acceptables pour l'environnement;
b) un engrais azoté en une quantité à activité synergique et
c) un adjuvant en une quantité à activité synergique.

2. Mélange herbicide selon la revendication 1; contenant un dérivé de benzoyle à substitution 3-hétérocyclyle de formule I selon la revendication 1, dans lequel R³ désigne l'hydrogène.

3. Mélange herbicide selon la revendication 1 ou 2, contenant un dérivé de benzoyle à substitution 3-hétérocyclyle de formule I selon la revendication 1, dans lequel
R¹,R² représentent un halogène, un alkyle en C₁-C₆, un alkylthio en C₁-C₆, un alkylsulfinyle en C₁-C₆, un alkylsulfonyle en C₁-C₆.

4. Mélange herbicide selon l'une des revendications 1 à 3, contenant un dérivé de benzoyle à substitution 3-hétérocyclyle de formule I selon la revendication 1, dans lequel X représente un isoxazolyle et un 4,5-dihydroisoxazolyle, qui peuvent éventuellement être substitués par un alkyle en C₁-C₆.

5. Mélange herbicide selon l'une des revendications 1 à 4, contenant un dérivé de benzoyle à substitution 3-hétérocyclyle de formule I selon la revendication 1, dans lequel X représente un isoxazole-5-yle, un 3-méthyl-isoxazole-5-yle, un 4,5-dihydroisoxazole-3-yle, un 4,5-dihydro-5-méthylisoxazole-3-yle, un 4,5-dihydro-5-éthylisoxazole-3-yle, un 4,5-dihydro-4,5-diméthylisoxazole-3-yle.

6. Mélange herbicide selon la revendication 1, contenant du 4-[2-chloro-3-(4,5-dihydroisoxazole-3-yl)-4-méth-ylsulfonyl-benzoyl]-1-méthyl-5-hydroxy-1H-pyrazole.

7. Mélange herbicide selon la revendication 1, contenant du 4-[2-méthyl-3-(4,5-dihydroisoxazole-3-yl)-4-méth-ylsulfonyl-benzoyl]-1-méthyl-5-hydroxy-1H-pyrazole.

8. Mélange herbicide selon l'une des revendications 1 à 7, contenant un engrais azoté b) choisi dans la série de l'ammoniac, des sels d'ammonium, de l'urée, de la thiourée et de leurs mélanges.

9. mélange herbicide selon l'une des revendications 1 à 8, contenant
0,5 - 90 % en poids du dérivé de benzoyle à substitution 3-hétérocyclyle a) ;
5 - 94,5 % en poids de l'engrais azoté b);
5 - 50 % en poids de l'adjuvant c).

10. Procédé pour la préparation d'un mélange herbicide selon l'une des revendications 1 à 9, **caractérisé par le fait qu'**on mélange entre eux les composants a) à c) du mélange herbicide.

11. Procédé pour la lutte contre la croissance des plantes indésirables, **caractérisé par le fait qu'**on mélange une quantité à activité herbicide des composants a) à c) du mélange herbicide selon l'une des revendications 1 à 9 et on fait agir sur les plantes ou leur biotope.
